# EUROPEAN PATENT APPLICATION

(11) **EP 2 351 891 A1**
(43) Date of publication of application: **03.08.2011**
(21) Application number: 10150430.6
(22) Date of filing: 11.01.2010
(51) Int. Cl.: E04C 2/20, E04C 2/288

(54) **Insulation material with mechanical strength and building elements and composites made thereof**

(71) Applicant: Armacell Enterprise GmbH, 48153 Münster (DE)
(72) Inventor: Weidinger, Jürgen, 48167 Münster (DE); Meller, Mika, 02880 Veikkola (FI); Li, Jie, 4800 Zofingen (CH)
(74) Representative: von Füner, Nicolai

(57) **Abstract**

The present invention relates to an insulation material for thermal and sound insulation with high mechanical strength, thus providing structural integrity from its own, and its composites with other building materials, such as concrete, for providing pre-insulated building elements, the manufacturing of such material and its composites and the use thereof.

## Description

The present invention relates to an insulation material for thermal and sound insulation with high mechanical strength, thus providing structural integrity from its own, and its composites with other building materials, such as concrete, for providing pre-insulated building elements, the manufacturing of such material and its composites and the use thereof.

Insulation has become an important part of the building and construction sector especially during recent years. New energy saving regulations as well as general energy efficiency and ecologic trends have been leading to a large number of developments, including building elements being pre-insulated before final mounting. The materials used for e.g. wall insulation mostly are organic plastics foams, dominated by expanded polyurethane (PU) and expanded polystyrene (PS) in a lot of varieties, also in composites; e.g. DE 102005032557 describes a simple composite where concrete is cast onto an insulation where the insulation material is used as a mould, DE 10003213, DE 19631800 and others describe similar materials; CN 201236412 describes a composite of PS with concrete in a moulding process; GB 1367759 claims a multilayer composite based on PS, and US 4459334, US 4028158, US 4130614, GB 1182657, GB 1161045, JP 11035727, JP 8021018, JP 2215521, KR 100592052, KR 102006021127, KR 102006022043, SE 514501, EP 2116753, DE 19815933, CN 201236411 etc. vary the classic PU/PS insulation topic in multilayer composites. However, these PU/PS and similar materials, being economic and thus widely spread, of course, show some deficiencies like brittleness, insufficient impact strength, swelling when moist, too high compressibility, a generally low mechanical level, poor mounting properties etc. that are not favoured when it comes to building insulation and its manufacturing. Some examinations have been done on improvement of classic PU/PS insulation, such as in KR 102006019102 where Styrofoam is supported by massive polyethylene terephthalate (PET) or in KR 102006021128, KR 100517732 and NL 8103038 where a PET film or layer is supporting. DE 102004011775 claims a board where foam beads are welded onto a honeycomb structure, and mentions that PET could be used as foam bead material among others. KR 102006114854 describes a sound insulation panel where PET is mentioned as one foam material among others. Generally, PET or alkylidene terephthalates have shown to be basically suitable for building industry requirements: the use of massive PET for waterproofing has been mentioned in JP 2002264249, CA 2281031 and KR 102006115089, the compatibility of terephthalate polyesters (in massive form) and mineral based building materials such as concrete has been shown by various inventions, such as EP 1537168, JP 2001038322 or JP 2002356354 and JP 10278057 (the latter ones claiming the use of recycled PET flakes; JP 2004100337 mentions the use of recycled PET pressed in between nonwoven mats for insulation). The stability and structural strength of massive PET has been used e.g. for the casting of concrete parts in JP 10131125 and JP 2002004574; the making of terephthalate foams have been mentioned in some literature, such as EP 0866089, US 5288764, JP 5117501, JP 62004729, WO 1997015627 and WO 2001051549 (JP 8151470 mentions recycled material made to foam), their use in building and construction for window sills is claimed in DE 10117177, and their use as insulation in the building industry has been claimed in JP 4142363, JP 57038119 and JP 2000053796. The latter discloses PET foam with densities of 10 to 600 kg/m³, a range being way too large to correlate with reasonable mechanical properties being essential for the intended use, and all three documents do neither reveal the possibility of structural integrity provision nor the specific suitability of PET for concrete casting and connection thereto. DE 02005006855 mentions a PET foam element acting as insulation against heat bridging which can bear some weight load by other construction elements; however, neither the real strength of PET as foam nor the possibility of direct connection to e.g. concrete during casting has been thoroughly understood or examined in the field of building and construction by any of the a.m. prior art. The a.m. materials provide sufficient insulation in many cases (attention has to be paid to the fact that often thermal conductivity values are provided with the foaming gas still in the cells -as often done for polystyrene and polyurethane- and not yet being replaced by air that would render the insulation performance worse), however, they lack of structural integrity, means, these foams are not mechanically strong enough to bear weight, impact, stress, torsion etc. in a way that would be desirable to achieve the most economic and ecologic possible constructions; the constructive integrity always has to be ensured by a second component. This is mainly due to the fact that a.m. kind of foams do not show the appropriate property profile essential for insulations that can provide structural integrity.These properties are resistance versus compression, e.g. by weight (compressive strength) in combination with resistance against creeping, flowing or destructive shearing (compressive modulus and shear strength). Some of the a.m. sponges show partially good compressive strength, some good shear strength, but only few provide both properties in a good combination, such as some PET foams. However, the stronger these kinds of foam will get, the more brittle they will become, too, which is a killer criterion in the building industry as this will lead to mounting problems and material loss by scrap. The third property in the essential property triangle thus is a remaining flexibility under stress, means, a reasonable level of remaining shear elongation.

A major object of the present invention thus is to provide an insulation material with very high compressive strength and a high shear modulus, but with minimum possible brittleness, means sufficient shear elongation, excellent compatibility to building materials, e.g. concrete, excellent mounting properties, e.g. for screwing or nailing it, and a related process for manufacturing the same and its composites.

As a result of our research on polyester core foams, e.g. for highly mechanically loaded rotor blade cores, we surprisingly found that such a material not showing the above mentioned disadvantages can be achieved by modification of a polyester core foam in regard to cell size and cell structure and surface, and that this material is able to provide intrinsic structural integrity to building elements which will allow to save material, reduce wall thicknesses etc.

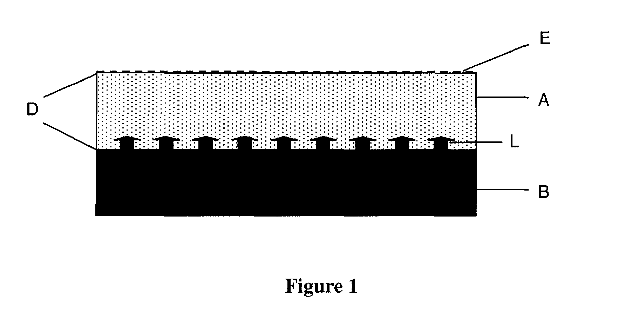

The claimed material contains compound (A), see fig. 1, which is at least one expanded polyalkylidene terephthalate board or sheet. Preferred for the making of such board are polyethylene terephthalate (PET) polymer foams, especially preferred such being produced in a reactive extrusion process where chain extension takes place by the help of chemicals such as, but not exclusively, anhydrides, water/moisture scavengers, hydrophobic substances, acids, alkalis etc. The process can be carried out by reacting the polymers by chain extension followed or paralleled by loading with a blowing agent, or by separating the reactive process from the foaming process. The foaming can be achieved by physical foaming agents, either solvent blowing, means e.g. by loading the melt with pressurized liquids such as, but not exclusively, isobutane, cyclopentane, cyclopentadiene etc., and mixtures thereof, or with gases such as, but not exclusively, CO₂, nitrogen etc., and mixtures thereof; or by chemical foaming agents, such as, but not exclusively, azo-compounds, carbonates etc., and mixtures thereof; or by mixtures of chemical and physical foaming agents in any ratio and composition. Preferred is a mixed solvent-gas process. Furthermore preferred is a process where the two steps of chain extension and foaming are carried out separated in one extruding machine or in two machines, especially preferred is a process where the compounding of the reactive components is done in a separate first unit; chain extension then can take place in a more controlled way in the first unit or in the final extruder or in both. The compound (A) may contain other ingredients other than the polymer and the chain extender(s) themselves, such as, but not exclusively: fillers, other polymers (thermoplasts, thermosets, TPEs, elastomers), fibres, additives, colours, crosslinkers, ceramifying or char-forming agents, intumescent systems, stabilizers, anti-hydrolysis agents, flame retardant agents etc. The final board can consist of more than one layer of foam, with the individual layers having same or different properties, such as mechanical strength, density, open cell content etc. The layers can be adhered by melting them together or by using adhesives (D). One surface of the final board (as an intended "inner surface") may be rough in the sense that the outermost layer (0.1 to 0.5 mm is sufficient) is removed mechanically or physically to obtain open cells for enhancement of adhesion to substrates (B); the other surface (as an intended "outer surface") may be closed to provide a water repellent surface and a water vapour barrier and to facilitate possible adhesion to further external layers or part of the composite by use of adhesives (D). A safely closed surface can not be achieved only by the extrusion process as there will always be some voids caused by gas bubbles breaking through. Therefore the "outer" surface is preferably either treated after extrusion of the board by temperature to melt the surface homogenously (e.g. by flame, hot plate, hot cylinder or belt etc.); or the surface is coated or laminated with an additional layer (E). If both surfaces are laminated, preferably to achieve closed and strong surfaces, the board (A) can be used directly as or for lightweight and insulated building elements that are not under high static load, such as parting walls, roof insulation etc. The final board has a high content of closed cells to provide good insulation properties. Preferred closed cell content is in the range of 50 to 100%, especially preferred are 70 to 90%. For good insulation performance -under the condition that mechanical strength is preserved- the density of the final board should be in a range of 10 to 300 kg/m³, preferably 20 to 150 kg/m³, especially preferred are 30 to 80 kg/m³. The thermal conductivity should be below 0.1 Wm¹K⁻¹, preferably smaller than 0.08 Wm⁻¹K⁻¹, especially preferred are materials with thermal conductivity lower than 0.04 Wm⁻¹K⁻¹ (when measured in a state where the foaming agent gas had already been exchanged 100% by air).

The claimed material may contain at least one layer (B) consisting of a massive component, such as metal, wood, stone, concrete etc. Preferred are materials that can be brought into connection with (A) in a semi-automatic or automatic process, i.e. showing an initial viscosity or potential for being cast or moulded. Especially preferred are mineral based materials, such as concrete, clay, mortar or cement due to their good compatibility with PET. The layer (B) can be connected with (A) by chemical methods (adhesion) or by mechanical means (screws, bolts, joints, undercuts etc.). Preferred are ways of connecting (B) to (A) by letting (B) or parts of it penetrate into the "inner" (i.e. open cell) surface of (A) by bringing the compound (B) in its original or diluted composition onto the foam board, e.g. by pouring/casting, pressing, moulding, laminating, co-extruding etc. (see symbolic interactions L in figure 1) Especially preferred are ways of connecting (B) to (A) where no additional substance or processing step is needed, such as, but not exclusively, continuously casting partially matured concrete onto a moving foam board and let it set.

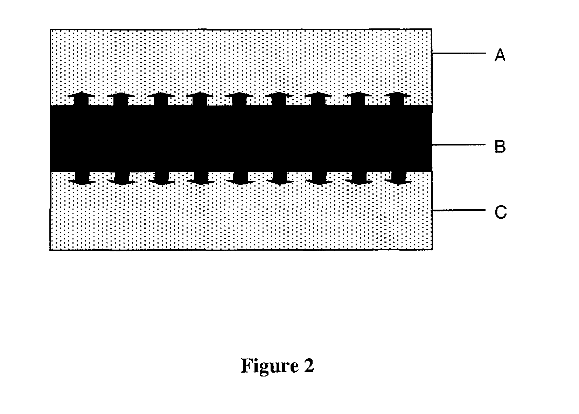

The claimed material furthermore may contain at least one additional functional layer (C) consisting of foam board according to (A), but being put on the other, second surface of (B), to be an inner or indoor layer, see fig. 2. This can be achieved by chemical or mechanical adhesion as explained for (B). Preferred is a manner of connecting (C) to (B) where no additional substances or measures are needed, especially preferred is a process analogous to the one shown for the (A)-(B)-connection, but where the "inner" (open cell) surface of (C) is put on top of the semi-set concrete that has been brought onto board (A) shortly before, applying only very slight pressure. The low specific weight of (C) will ensure that no deformation of (B) can take place. (C) can be protected, decorated etc. by additional layers (E).

The claimed material may contain adhesives (D) to bond the layers (A), (B), (C), (E) of the composite together. (D) can be chosen from mineral or organic based adhesives, preferred are mineral based, thus non- or low-combustible substances, and/or flame retardant organic adhesives, and mixtures thereof.

The claimed material furthermore may contain additional functional layers (E), consisting of e.g. mineral based substances, metal, fibres, paper or plastics, in all forms (e.g. layer, sheet, foil, mesh, fabric, weave, nonwoven etc.) as covering on (A) and/or (C) to act e.g. as a protective, shielding, a reinforcing or as a decorative layer, see fig 1. The compounds (E) may be bond to (A) or (C) by adhesives such as (D), or adhere by themselves. A preferred outermost layer (E) on an outer or outdoor sided layer (A) would be of a semi-permeable kind, especially preferred are such outermost layers of silicate or silicone type to render the surface extremely hydrophobic, but being very permeable to vapour, which leads to the effect that possible humidity being present in the building element or in the building itself would be forced to evaporate from the composite by osmotic effect, whereas rain or humidity from the environment would be repelled or condensed on the surface and drop off.

The claimed material furthermore may contain any further element (F) necessary for the intended application, such as, but not exclusively, parts made from wood, glass, metal or concrete etc., structures for building purposes, cable or wire, ducts, pipes, hose etc. The compounds (F) may be bond to other compounds of the material by adhesives such as (D) or adhere by themselves, or be part of the building element without being bond.

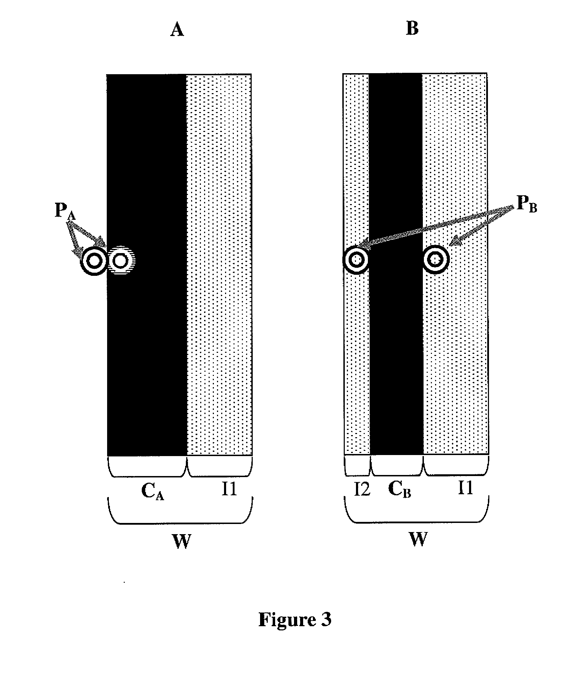

A very prominent advantage of the claimed material is the fact that the polyalkylidene terephthalate foam is designed to be rigid, strong, but still flexible enough to allow the manufacturing of building elements in broad varieties: the structural strength of the claimed material allows reducing the thickness of the massive part of the composite (see fig. 3 B) in comparison to existing systems (fig. 3 A). At a given wall thickness W and a given outer insulation thickness I1 it is possible to reduce the massive part's thickness from C_{A} to C_{B}, the remaining space being taken by an inner insulation I2. The resulting double pre-insulated wall of system 3 B is analogous to the claimed composite (A)(B)(C) and will be lighter and of significantly higher insulation efficiency, but with same static strength than system 3 A. Accordingly, if there are less requirements given concerning insulation, the whole construction can be designed thinner and lighter in comparison to existing systems.

The strength of the claimed material leads to another prominent advantage which is the fact that there is neither compression nor deformation of the foam board when being loaded even with heavy weight during manufacturing, means, no internal stress creation which is a problem with less structural foams where deformation can be occurring as well as tension build-up that could lead to rip or tear in the e.g. concrete or the insulation foam or both.

Another prominent advantage of the material is the fact that it can be handled and mounted without special care and by methods being standard in the building and construction industry. The high strength of the foam material will allow to fix it by screwing, nailing, by bolts, frames etc.

This leads to another advantage of the claimed material which is the fact that functional parts e.g. necessary for mounting, such as studs, joists, lintels/beams or joints of any kind can either be fixed to the foam part of the material after foaming or even being embedded during the manufacturing process.

A further prominent advantage of the claimed material is the fact that -due to the durability of the terephthalate foam- mechanical impact such as scratch or bite will not cause damage, leading to the fact that e.g. rodents or termites can not cause harm to insulation or building elements.

A further prominent advantage of the claimed material is the fact that (A) and (C) will show excellent adhesion to a mineral layer (B) without any further measures and that the resulting composite will act like one material.

This leads to another prominent advantage of the claimed material which is the fact that it can be easily bond, plastered, coated etc. to and with materials and methods being standard in the building industry due to the fact that the terephthalate surface will give excellent chemical interaction, leading to bonding, with e.g. mortar, cement, plastics enriched mineral adhesives used for fixing tiles etc.

Another important advantage of the claimed material for insulation purposes is the fact that it shows a low water vapour transmission (WVT, described by the µ-factor) of µ > 2,000 up to 7,000 without further treatment and >15,000 with respective coating which will prevent the migration and condensation of humidity into the building element structure even under harsh environmental conditions. This will prevent corrosion or fouling/mould growth under insulation.

Another advantage of the claimed material is the fact that the foam material would not swell even when being permanently exposed to water and therefore add no undesired tension to the composite of building structure.

Another important advantage of the claimed material is its performance at force majeure incidents, namely earthquakes and storms such as cyclones, hurricanes, tornados etc. The strong but still flexible foam (A) and/or (C) is able to absorb and disperse energy and thus can lower the amplitudes of earthquakes and act as a damping element for and together with the massive structure (B). This positive effect is also given in the case of wind shocks. Additionally, the closed cell foam structure will disperse and slow down air flow of heavy winds, and when sealed correctly claimed building elements will significantly lower the pressure difference inside/outside a building in case of heavy storm (named pressure difference usually is the root cause for destroyed roofs or even complete structural breakdown during heavy storm).

A further advantage of the claimed material is the possibility to adapt its properties to the desired property profile (concerning mechanics/durability, insulation effect etc.) in a certain range by possible independent modification of the core (B) and/or the layer(s) (A) and (C) concerning respective thickness, mechanical and physical properties etc.

It is a further advantage of the claimed material that the level of penetration of (B) into the cell structure of (A) and/or (C) can be easily influenced during the manufacturing process by altering the cell size and the level of roughness (level of outermost layer removal) of the surface of (A) and/or (C) in combination with the viscosity of (B) and a possible external pressure being applied.

Another major advantage of the claimed material is the fact that the base material for the layers (A) and/or (C) can be ecologic as it can be foamed from recycled material, such as recycled PET.

This leads to another advantage of the claimed material as it is recycling-friendly itself due to the fact that pure polyester is obtained after removal of or from the layer (B).

A basic advantage of the claimed material is the fact it is free of fibres, halogenated substances and PVC, all of them being under survey and being discussed for environmental and health issues.

It is a further advantage of the claimed material that it can be produced in an economic way in a continuous or semi-continuous process, e.g. by extrusion followed by coating as discussed for (B). It shows versatility in possibilities of manufacturing and application. It can be extruded, co-extruded, laminated, coated, moulded, co-moulded, overmoulded etc. directly as a multilayer system.

It is a further advantage of the claimed material that it can be manufactured and given shape by standard methods being known in the industry and that it does not require specialized equipment.

A further advantage of the claimed material is its excellent suitability for both thermal and sound/vibration insulation and the fact that its insulation properties are provided over a wide range of temperature. E.g. PET foam will withstand temperatures from -200 to +280 °C, being one of the most durable organic insulation materials.

This leads to another prominent advantage of the claimed material which is the fact that objects which can get very hot or cold (e.g. pipes or ducts for heating or chilling) can be embedded into the insulation (see fig. 3 B, possible positions are shown as P_{B}) due to the durability of polyalkylidene foams; else they would have to be mounted separately or put into the massive part of the element or wall where no insulation is provided (see fig. 3 A, possible positions are shown as P_{A}).

## Claims

1. A material consisting of an insulation board made by reactive extrusion and foaming of polyester.

2. The material according to claim 1 wherein the polyester is a polyalkylidene terephthalate.

3. The material according to claim 1-2 wherein the closed cell content is in the range of 50 to 100%, especially preferred from 70 to 90%.

4. The material according to claim 1-2 wherein density of the board is in a range of 10 to 300 kg/m³, preferably 20 to 150 kg/m³, especially preferred are 30 to 80 kg/m³.

5. The material according to claim 1-2 wherein the thermal conductivity is below 0.1 Wm-¹K⁻¹, preferably below 0.08 Wm⁻¹K⁻¹, especially preferred below 0.04 Wm⁻¹K⁻¹.

6. The material according to claim 1-5 wherein the polyalkylidene terephthalate is recycled polyethylene terephthalate.

7. The material according to claim 1-6 wherein a massive layer is brought in connection with the foam board.

8. The material according to claim 1-7 wherein the massive layer is mineral based.

9. The material according to claim 1-7 wherein the massive layer is concrete.

10. The material according to claim 1-9 wherein a second foam layer according to claim 1-5 is applied on the other surface of the massive layer.

11. The material according to claim 1-9 wherein an outside layer is applied showing both water repellent and vapour permeable properties.

12. The material according to claim 1-10 where additional functional and/or decorative layers are applied to the surface of the foam board.

13. A process for manufacturing the material according to one of claims 1-12 in a continuous process.

14. A process for manufacturing the material according to one of claims 1-12 in a two-step-extrusion and connecting process.

15. A process for manufacturing the material according to one of claims 1-12 where concrete is cast onto an extruded foam board from which one surface layer has been removed to ensure good penetration of the concrete and/or where an extruded foam board with such surface is slightly pressed on semi-set concrete.

16. The use of a material according to one of claims 1-12 for building elements providing thermal and/or acoustic insulation and/or acoustic and/or vibration damping.

## Amended claims

### Amended claims in accordance with Rule 137(2) EPC.

**1.** A material consisting of an insulation board made by reactive extrusion and foaming of polyester, wherein a massive layer is brought in connection with the foam board and wherein the massive layer is mineral based.

**2.** The material according to claim 1 wherein the polyester is a polyalkylidene terephthalate.

**3.** The material according to claim 1-2 wherein the closed cell content is in the range of 50 to 100%, especially preferred from 70 to 90%.

**4.** The material according to claim 1-2 wherein density of the board is in a range of 10 to 300 kg/m³, preferably 20 to 150 kg/m³, especially preferred are 30 to 80 kg/m³.

**5.** The material according to claim 1-2 wherein the thermal conductivity is below 0.1 Wm⁻¹K⁻¹, preferably below 0.08 Wm⁻¹K⁻¹, especially preferred below 0.04 Wm⁻¹K⁻¹.

**6.** The material according to claim 1-5 wherein the polyalkylidene terephthalate is recycled polyethylene terephthalate.

**7.** The material according to claim 1-6 wherein the massive layer is concrete.

**8.** The material according to claim 1-7 wherein a second foam layer according to claim 1-5 is applied on the other surface of the massive layer.

**9.** The material according to claim 1-7 wherein an outside layer is applied showing both water repellent and vapour permeable properties.

**10.** The material according to claim 1-8 wherein additional functional and/or decorative layers are applied to the surface of the foam board.

**11.** A process for manufacturing the material according to one of claims 1-10 in a continuous process.

**12.** A process for manufacturing the material according to one of claims 1-10 in a two-step-extrusion and connecting process.

**13.** A process for manufacturing the material according to one of claims 1-10 wherein concrete is cast onto an extruded foam board from which one surface layer has been removed to ensure good penetration of the concrete and/or where an extruded foam board with such surface is slightly pressed on semi-set concrete.

**14.** The use of a material according to one of claims 1-10 for building elements providing thermal and/or acoustic insulation and/or acoustic and/or vibration damping.
